# EUROPEAN PATENT SPECIFICATION

(11) **EP 1 795 402 B1**
(45) Date of publication and mention of the grant of the patent: **25.03.2009**
(21) Application number: 05111843.8
(22) Date of filing: 08.12.2005
(51) Int. Cl.: B60R 21/01

(54) **Seat occupancy detection device**
Vorrichtung zur Sitzbelegungserkennung
Système de détection d'occupation d'un siège

(43) Date of publication of application: 13.06.2007
(73) Proprietor: IEE International Electronics & Engineering S.A.R.L., 6468 Echternach (LU)
(72) Inventor: Schleeh, Thomas, 54293, Trier (DE)
(74) Representative: Beissel, Jean

(56) References cited:
- EP-A- 1 457 391
- LU-A1- 88 828
- US-A- 5 573 269

## Description

### Technical field

The present invention generally relates to automotive occupancy sensor systems for determining the presence of an object or a passenger in a seat, in order to provide an occupancy state or condition signal for use with a safety restraint system control. The present invention more specifically relates to a system for classification of seat occupancy.

### Background Art

In order to protect the lives of passengers during a traffic accident, modern vehicles are generally fitted provided with a protection system comprising several airbags and seat belt pretensioners, which are used to absorb the energy of a passenger released during the collision due to the accident. It is clear that such protection systems are most effective when they are well adapted to the specific requirements of actual seat occupancy. That is why microprocessor-controlled protection systems have been designed which provide several operational modes, allowing for example an adaptation of the instant at which airbags are deployed, the volume to which the airbags are inflated, the instant at which safety belts are released after the collision, etc, as a function of the stature of a passenger on the seat. In order to enable the control microprocessor to select the optimum operational mode for a given seat occupancy status, it is of course necessary to detect one or several parameters characterizing the occupancy status of the seat and to classify the occupancy into one of several classes, each of which is associated to a specific operational mode of the restraint system.

Although the merit of airbags is largely recognized in the interest of passenger safety, there are situations in which the deployment of an airbag is not desired or may be harmful or even constitute serious danger. For instance, in order to reduce the costs for the reparation of the vehicle, the airbag associated with a seat should be disabled when the respective seat is not occupied. Moreover, the presence of an auxiliary child restraint seat on the passenger seat may represent a situation, where the deployment of the airbags should be disabled. In fact, for most auxiliary child restraint seats, which point in the opposite direction to the direction of travel of the vehicle, i.e. rear facing infant seats, there is the risk that the deployment of the airbag will throw the child together with the seat violently towards the rear of the vehicle and will be the cause of serious injury. It follows that the occupancy parameters for these cases should also be reliably detected.

The detection of can e.g. be achieved by seat occupancy sensors, which comprise a plurality of pressure sensors distributed over the surface of the seat. The pressure sensors comprise pressure sensitive resistors, i.e. the resistance of these pressure sensors changes with the pressure applied on the sensor. The reading of the resistance values of the individual pressure sensors thus gives an indication on the pressure acting on each cell and accordingly can be related to the weight acting on the seat. Furthermore the distribution of the pressure values over the surface of the seat can be related to the size or the form of a person or an object occupying the seat. Such occupancy sensors for determining a pressure profile acting on the seat are well known in the art.

However, the total weight of a passenger does not act solely on the surface of the seat, since part of the weight is supported by the passenger's legs, which rest on the floor of the vehicle, and another part rests on the back of the seat. In addition, the ratios between the various parts vary considerably with the passenger's position on the seat. In certain critical seating positions, the pressure pattern resulting from the passenger may therefore be not sufficiently discrete to allow a classification by use of a pressure pattern system. Document US 5,573,269 discloses an apparatus including a weight sensor in the seat and a plurality of foot sensors that detect the position of the occupant's feet in the foot well for compensating the effect of the location of the occupant's feet on the sensed weight.

A different approach for gathering relevant parameters of a seat occupancy is based on the detection of the capacitive coupling of a body to one or several electrodes arranged in the seat. Such a measurement system is for instance described in LU-A-88 828. This measurement system comprises at least one transmitting electrode and at least one receiving electrode that are capacitively coupled by a conductive body. The receive electrodes are connected to an analysis circuit that determines the capacitive coupling of the transmitting antenna with the conductive body by comparing the measured signal with a reference signal. Various other systems have been disclosed with electrodes arranged at different locations in the passenger compartment in order to detect the presence and/or the nature of seat occupancy and to classify the occupancy status in one of several classes.

EP 1 457 391 A1which corresponds to the preamble of claim 1, describes a capacitive sensing system for detecting the occupancy states of a vehicle seat. This system comprises first and second capacitive electrodes arranged in a vehicle compartment, the first capacitive electrode being arranged in a seat, the second capacitive electrode being arranged in a foot-area of the vehicle. The occupancy states of the seat can be detected in the so-called "loading mode", in which the capacitive coupling between the seat electrode driven by an AC voltage and an occupant or object on the seat is determined. Alternatively, the system can operate in a so-called "coupling mode", in which the electrode in the foot area is driven by an AC voltage and the capacitive coupling between the foot area electrode and the seat electrode is determined. An advantage of this system is a more reliable detection of the occupancy states of the seat.

Despite the efforts made in the recent years, misclassification of the occupancy state of a vehicle seat remains an issue. For example, belted child restraint systems (CRS; referred to hereinafter as "child seats") sometimes generate a pressure or force pattern on the seat that is similar to the pressure or force pattern generated by an adult, which may cause misclassification by a pressure sensor. As a further example, there is, in terms of pressure profiles, a high degree of similarity of the 5%-female and the 50%-male classes.

### Object of the invention

The object of the present invention is to provide an improved system for the detection of seat occupancy. This object is achieved by a system according to claim 1.

### General Description of the Invention

A seat occupancy detection system for a vehicle comprises a seat antenna electrode arranged in a seat of a vehicle a floor antenna electrode arranged in a foot area associated with the seat and a driver and evaluation circuit, which is operatively connected to the seat and floor antenna electrodes and which includes means for determining capacitive coupling of said seat and floor antenna electrodes with an object. According to an important aspect of the invention, the seat occupancy detection system comprises at least one additional floor sensor arranged in the foot area, the floor antenna electrode and the additional floor sensor being individually operable by the driver and evaluation circuit.

As will be appreciated, the present invention provides for a capacitive detection system for occupant classification. In order to discriminate reliably between different occupant classes, the system has at least one floor sensor in addition to an antenna electrode. For example, in the case of an adult seated on the vehicle seat, the system allows for detecting the posture of the occupant based on the readings of the capacitive sensing system and the additional floor sensor. Those skilled in the art will note that the object that may capacitively couple to the seat and floor antenna electrodes can be any portion of an occupant's body (feet, back, hips, trunk, etc.) or any other animate or inanimate object located on the vehicle seat or in the foot area associated with this seat Those skilled in the art will further note that the means for determining capacitive coupling of said seat and floor antenna electrodes with an object may include means, which determine the capacitive coupling between the floor and the seat antenna electrodes. In this case, the respective other antenna electrode may be considered as the object; i.e. the object, which the floor antenna electrode couples with, is the seat antenna electrode, and vice versa.

The additional floor sensor comprises at least at least one additional floor antenna electrode. Specific arrangements of the floor antenna electrodes are considered as advantageous. According to a first such arrangement, at least one of the at least one additional floor antenna electrode and the above-mentioned floor antenna electrode ("the floor antenna electrodes") is arranged on a left side of the foot area with respect to an imaginary longitudinal line and at least one of the at least one additional floor antenna electrode and the floor antenna electrode is arranged on a right side of the foot area with respect to the imaginary longitudinal line, the imaginary longitudinal line extending substantially centrally through the vehicle seat and the foot area in a normal direction of travel of the vehicle. In other terms, the floor antenna electrodes may be divided into a group of left floor antenna electrodes and a group of right antenna electrodes, the group of left floor antenna electrodes being arranged on a left side of the foot area with respect to the imaginary longitudinal line and the group of right antenna electrodes being arranged on a right side of the foot area with respect to the imaginary longitudinal line. According to a second advantageous arrangement of electrodes, at least one of the at least one additional floor antenna electrode and the floor antenna electrode is arranged on a front side of the foot area with respect to an imaginary transversal line and at least one of the at least one additional floor antenna electrode and the floor antenna electrode is arranged on a rear side of the foot area with respect to the imaginary transversal line, the imaginary transversal line extending through the foot area substantially perpendicular to a normal direction of travel of the vehicle. In other terms, the floor antenna electrodes may be divided into a group of front floor antenna electrodes and a group of rear antenna electrodes, the group of front floor antenna electrodes being arranged on a front side of the foot area with respect to the imaginary transversal line and the group of rear antenna electrodes being arranged on a rear side of the foot area with respect to the imaginary transversal line. Naturally, these advantageous embodiments may be combined in a seat occupancy detection system comprising more than two floor antenna electrodes, for example a system with three, four or even more floor antenna electrodes. By determining the strength of capacitive coupling between the left/right or front/rear floor electrodes and the seat electrode(s), the system may gather information on the foot and/or leg position of an occupant. Of course, the driver and evaluation circuit may also include means for determining capacitive coupling between individual floor antenna electrodes. In this case, the coupling between a first floor electrode and a second floor electrode may be determined.

Preferably, the floor antenna electrode/s is/are arranged around a central region of the foot area, the central region being devoid of an antenna electrode, the central region being dimensioned and located in such a way that it accommodates for supporting a support leg of an auxiliary child seat placed on the seat. Some child seats have indeed a support leg that is supported by the compartment floor. In certain circumstances, this leg could cause significant capacitive coupling between the floor and the seat antenna electrodes and eventually give rise to a misclassification of seat occupancy.

Some of the antenna electrodes may be operable as transmitter antenna electrodes, while the other antenna electrodes may be operable as receiver antenna electrodes. Some or all of the antenna electrodes may also be operable as transmitter-receiver antenna electrodes. In a particular embodiment of the invention, the (at least one) floor antenna electrode is configured as transmitter antenna electrode, while the at least one seat antenna electrode is configured as receiver antenna electrode or as transmitter-receiver antenna electrode. Alternatively or additionally, the at least one floor antenna electrode may also be configured as receiver antenna electrode or as transmitter-receiver antenna electrode, while the at least one seat antenna electrode is configured as transmitter antenna electrode.

The driver and evaluation circuit may comprise an alternating current generator for individually applying an AC signal to each transmitter or transmitter-receiver antenna electrode. For determining the capacitive coupling of a particular pair of transmitter and receiver antenna electrodes, the driver and evaluation circuit may further comprise a current detection circuit operatively connected to the receiver antenna electrode, which detects the current induced in the receiver antenna electrode by capacitive coupling with the transmitter antenna electrode.
In addition to detecting the capacitive coupling between two different antenna electrodes (coupling mode), the system may also provide for detecting the capacitive coupling between an antenna electrode and an occupant, e.g. an object, an animal or a human (loading mode). As will be appreciated, the driver and evaluation circuit may include means for individually determining capacitive coupling of each one of the antenna electrodes with an occupant placed on the seat and/or in the foot area. In this case, the current detector operatively connected to the antenna electrodes detects the current flowing into the antenna electrodes, which current varies in response to the occupancy state of the seat.

According to another preferred embodiment, the additional floor sensor includes a pressure sensor, e.g. a pressure sensing mat, and the driver and evaluation circuit includes means for determining a pressure sensed by the pressure sensor. The skilled person will appreciate that the risk of misclassification of an occupant is significantly reduced by the additional information provided by the pressure sensor. The pressure sensor, for instance, may sense the position of a person's feet and the load acting on the floor by each foot. The pressure sensor may be arranged under the floor antenna electrode(s), i.e. the antenna electrodes are closer to the surface of the vehicle floor than the pressure sensor.

As will be appreciated, the seat occupancy detection system can comprise at least one additional seat antenna electrode arranged in the seat, each of the seat antenna electrodes being individually operable by the driver and evaluation circuit.

The seat and/or floor antenna electrodes may comprise a sensing electrode and a shielding electrode, the sensing electrode being arranged in substantially parallel facing relationship with the shielding electrode, the sensing electrode being directed towards an occupant when the occupant is seated on the seat, the shielding electrode being directed away from the occupant when the occupant is seated on the seat. The floor antenna electrode is preferably fixed in the vehicle compartment underneath a floor carpet of the vehicle. The antenna electrodes may comprise a metal foil, a metal wire fabric, a metal-coated fabric and/or a metal-coated thermoplastic film. In this context, "fabric" should be understood as to include any woven, knitted or felted material.

### Brief Description of the Drawings

Preferred embodiments of the invention will now be described, by way of example, with reference to the accompanying drawings in which:
- Fig. 1:: is a schematic representation of the measuring principle of a seat occupancy detection system according to a first embodiment of the invention;
- Fig. 2:: is a representation of passenger seating positions and corresponding foot positions;
- Fig. 3:: is a longitudinal cross-sectional view of a seat occupancy detection system according to a variant of the first embodiment of the invention;
- Fig. 4:: is a top view of the seat occupancy detection system shown in Fig. 3;
- Fig. 5:: is a longitudinal cross-sectional view of a seat occupancy detection system according to a second embodiment of the invention;
- Fig. 6:: is a top view of the seat occupancy detection system shown in Fig. 5;
- Fig. 7:: is a schematic view of a preferred configuration of the antenna electrodes for the present invention.

### Description of Preferred Embodiments

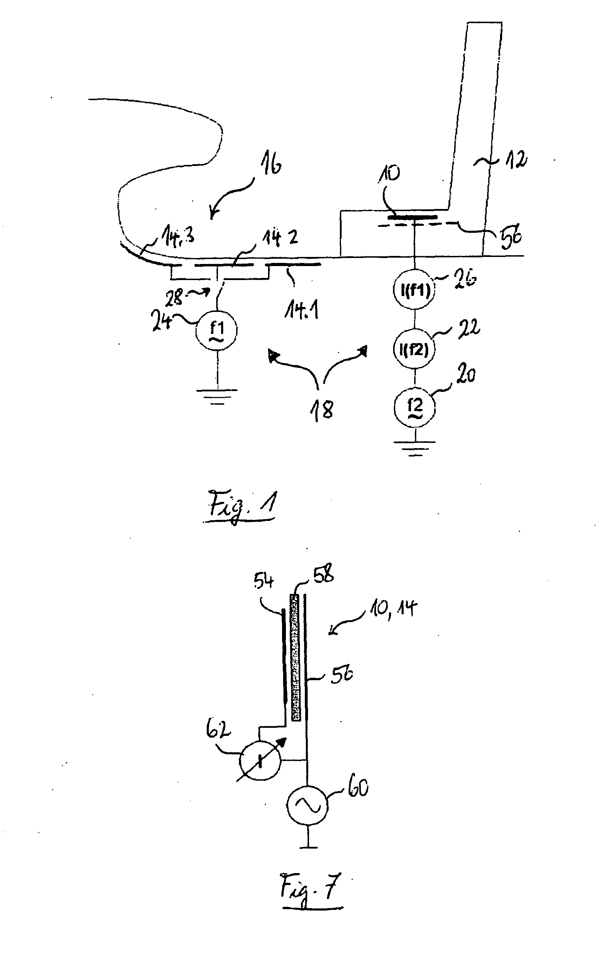

Fig. 1 schematically represents a first embodiment of a seat occupancy detection system. The system comprises a seat antenna electrode 10 arranged in the seat 12 of a vehicle and a floor antenna electrode 14.1 arranged in a foot area 16 of the vehicle compartment, e.g. underneath a floor carpet of the vehicle compartment. As additional sensors, the system comprises further floor antenna electrodes 14.2, 14.3 arranged in the foot area 16. The seat antenna electrode 10 is arranged in the seat plain of the seat 12.

The seat and floor antenna electrodes 10, 14 are operatively connected to a driver and evaluation circuit 18, which may be an integral component of an airbag control unit (not shown). Alternatively, the driver and evaluation circuit 18 is operatively connected to the airbag control unit for supplying data relating to an occupancy classification to said airbag control unit.

The driver and evaluation circuit 18 comprises a driver circuit 20 driving the seat antenna electrode and a detector 22, which determines capacitive coupling of the seat antenna electrode 10 with a conductive body or object placed on the seat 12. The driver circuit comprises e.g. an AC voltage source for generating an AC signal with a frequency f2. The detector 22, which determines capacitive coupling with a conductive body or object comprises a current meter for measuring a loading current flowing from the seat antenna electrode 10 towards an object placed on the seat 12, when the seat antenna electrode 12 is driven by the AC source.

Furthermore, the driver and evaluation circuit 18 comprises a driver circuit 24, which individually drives the floor antenna electrodes 14 and a detector 26 that detects capacitive coupling between the floor antenna electrode 14 and the seat antenna electrode 10. The driver circuit 24 driving the floor antenna electrode 14 comprises e.g. an AC voltage source for generating an AC signal with a frequency f1. The detector 26, which detects capacitive coupling between the floor and seat antenna electrodes, may comprise a current meter measuring a coupling current flowing from the floor antenna electrodes 14 into the seat antenna electrode 10, when at least one of the floor antenna electrodes is driven by the AC source 24. The driver circuit 24 driving the floor antenna electrodes 14 comprises a switch 28 for selectively driving the individual floor antenna electrodes 14.1, 14.2 or 14.3. By switching between the individual floor antenna electrodes 14.1, 14.2 or 14.3, the driver and evaluation circuit 18 may determine the coupling between a specific floor antenna electrode 14.1, 14.2 or 14.3 and the seat antenna electrode 10. By doing so, the driver and evaluation circuit 18 can determine, for instance, the foot or leg positions of a occupant seated on the seat 12. In order to distinguish between the individual floor antenna electrodes 14, the driver and evaluation circuit may drive them separately at different time intervals in such a way that a signal induced in the seat electrode can be attributed to a specific floor antenna electrode depending on the time interval in which it has been detected. Alternatively or additionally, the individual floor antenna electrodes can be driven at different frequencies. In this case, the a signal induced in the seat electrode can be attributed to a specific floor antenna electrode depending on its frequency. The skilled person will note that these methods for distinguishing between different antenna electrodes is not limited to the floor antenna electrodes, nor to the coupling between the floor antenna electrodes and a seat antenna electrode. For instance, these methods could also be used for distinguishing between different seat electrodes, or for the capacitive coupling between any antenna electrodes arranged in the vehicle compartment.

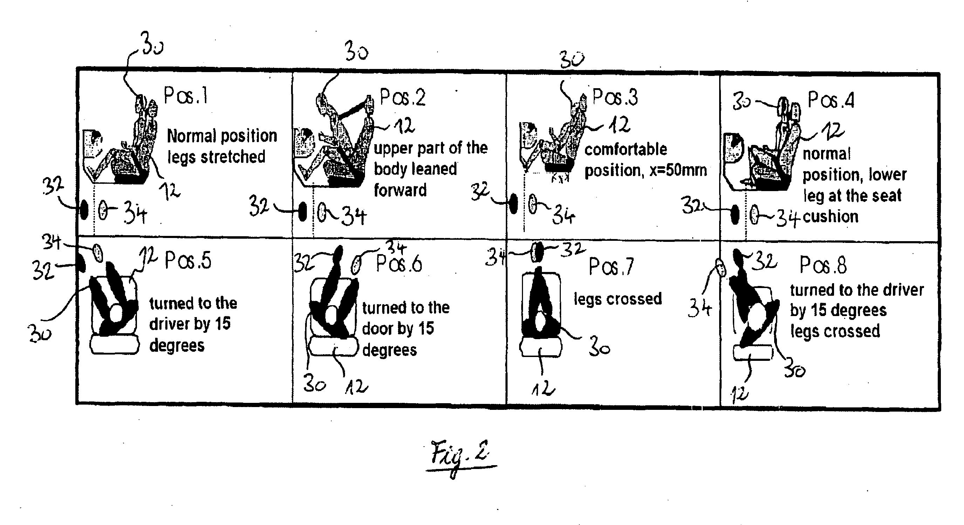

Fig. 2 illustrates a number of positions taken by an adult 30 seated on the passenger seat 12 of a vehicle. Reference numeral 32 indicates the position of the left foot of the occupant, reference numeral 34 indicates the position of the right foot of the occupant. The normal position of the occupant's feet 32, 34 is given below the representations of positions 1-4. Positions 5-8 are those positions that have an increased likelihood of misclassification by an occupant sensing system. For reliably detecting these positions, one preferably uses an occupant sensing system that can identify the left 32 and the right foot 34 of the occupant.

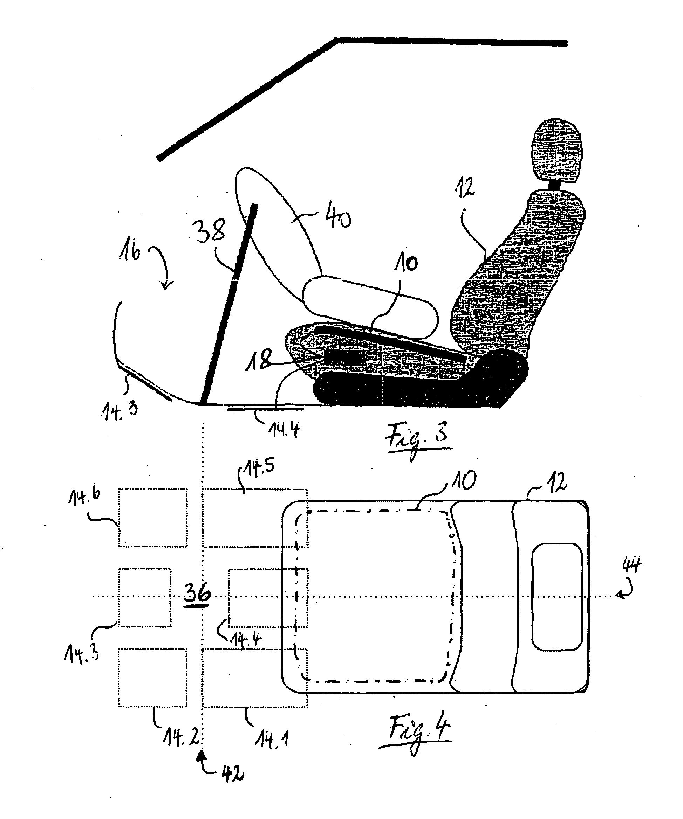

Figs. 3 and 4 illustrate a variant of the seat occupant detection system discussed above with respect to Fig. 1. As can best be seen in Fig. 4, the floor antenna electrodes 14.1-14.6 are arranged around a central region 36 of the foot area 16, which is devoid of an antenna electrode. The central region 36 is dimensioned and located suitably for supporting a support leg 38 of an auxiliary child seat 40 placed on the seat 12. The skilled person will note that this kind of child seats is rarely used nowadays. Nevertheless, if the support leg 38 of such a child seat rests on a floor antenna electrode, the coupling between this floor antenna electrode and the seat antenna electrode 10 could be seriously increased, thus potentially causing misclassification of the occupancy state. For example, the child seat 40 could erroneously be identified as an adult. By keeping a suitable portion of the compartment floor free of antenna electrodes ("blind spot"), one provides a region that can serve for supporting the support leg 38 of the child seat 40 without causing increased coupling between the floor antenna electrodes 14 and the seat antenna electrode(s) 10. The set of floor antenna electrodes 14 are formed by a group of front floor antenna electrodes 14.2, 14.3, 14.6 and a group of rear antenna electrodes 14.1, 14.4, 14.5. The group of front floor antenna electrodes 14.2, 14.3, 14.6 is arranged on a front side of the foot area 16 with respect to an imaginary transversal line 42, which extends through the foot area 16 substantially perpendicular to the normal direction of travel of the vehicle. The group of rear antenna electrodes 14.1, 14.4, 14.5 is arranged on a rear side of the foot area with respect to the imaginary transversal line 42. The skilled person will also note that the set of floor antenna electrodes 14 comprises a group of left floor antenna electrodes 14.1, 14.2, a group of middle floor antenna electrodes 14.3, 14.4 and a group of right floor antenna electrodes 14.5, 14.6. The group of left floor antenna electrodes 14.1, 14.2 is arranged on a left side of the foot area with respect to an imaginary longitudinal line 44, which extends substantially centrally through the vehicle seat 12 and the foot area 16 in the normal direction of travel of the vehicle. The group of right antenna electrodes 14.5, 14.6 is arranged on a right side of the foot area with respect to the imaginary longitudinal line 44 and the group of middle floor antenna electrodes 14.3, 14.4 extends along the imaginary longitudinal line 44. Of course, the seat occupancy detection system may also have another disposition of floor antenna electrodes. It should be noted, however, that dividing the set of floor antenna electrodes into a left and a right group proves useful for correctly determining the positions 5-8 shown in Fig. 2.

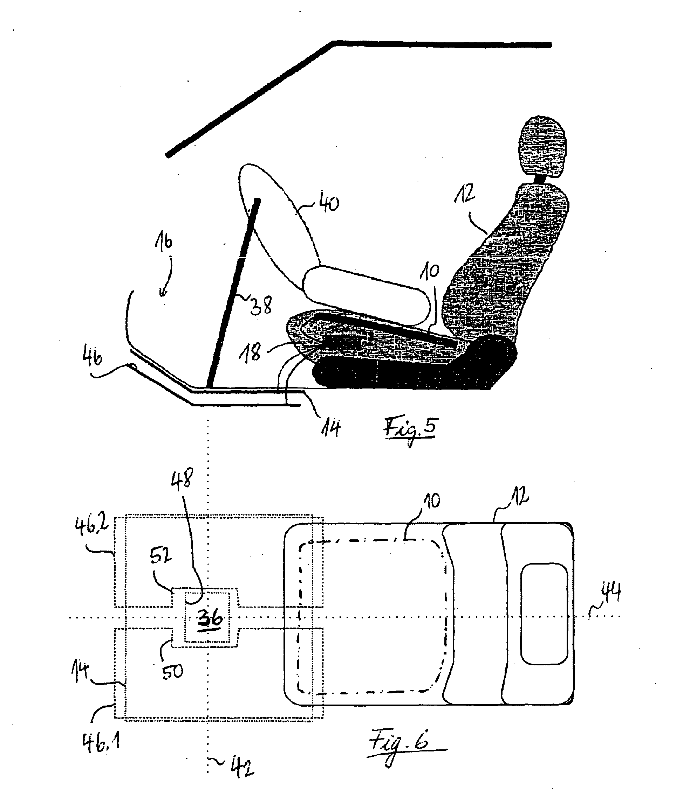

Figs. 5 and 6 illustrate another preferred embodiment of the instant invention. According to this embodiment, the seat occupancy detection system for a vehicle comprises a seat antenna electrode 10 arranged in a seat 12 of a vehicle a floor antenna electrode 14 arranged in the foot area 16 associated with the seat 12. A driver and evaluation circuit 18 is operatively connected to the seat and floor antenna electrodes and includes a detector 22 for determining capacitive coupling between the seat and floor antenna electrodes 10, 14. As an additional floor sensor, the seat occupancy detection system comprises a pressure-sensing mat 46 arranged in the foot area 16, underneath the floor antenna electrode 14. For instance, the pressure-sensitive mat 46 may comprise a plurality of pressure-sensitive cells, i.e. resistors whose electrical resistance changes with the pressure applied on the mat 46. The reading of the resistance values of the individual pressure-sensitive resistors thus gives an indication on the pressure acting on each cell and accordingly can be related to the weight acting on the floor. Furthermore, the distribution of the pressure values over the foot area (pressure pattern) can be taken into account for classifying a person or an object occupying the seat 12. The driver and evaluation circuit 18 includes means for determining a pressure sensed by the pressure sensor, e.g. a microprocessor or a controller (not shown).

In the configuration of Fig. 6, the seat occupancy detection system comprises a single floor antenna electrode 14, which may capacitively couple to the seat antenna electrode 10. The floor antenna electrode 14 is provided with a gap 48, which gap 48 defines a central region 36 of the foot area 16 devoid of an antenna electrode. As in the embodiment discussed above, the central region serves to reduce capacitive coupling of the floor and seat electrodes in case of a leg-supported child seat 40. The pressure-sensing mat comprises a left active region 46.1 and a right active region 46.2 (with respect to the imaginary longitudinal line 44). Each of the active regions 46.1, 46.2 has a recess 50, 52 at the central region 36, so that the pressure-sensing mat 46 will not detect the pressure caused by the support leg 38 of a child seat 40 placed in the central region 36.

The pressure profile detected by the pressure-sensing mat 46 is taken into accord by the driver and evaluation circuit 18 for the classification of the occupancy state. Compared to the known system with a single floor antenna electrode and a single seat antenna electrode, the risk of misclassification of an occupant is considerably reduced.

Fig. 7 shows a preferred configuration for the antenna electrodes 10, 14 of the present invention. The antenna electrode comprises a sensing electrode 54 (sense) directed towards the passenger compartment and a shielding electrode 56 (guard), directed away from the passenger compartment. An isolating layer 58 is arranged between the sensing electrode 54 and the shielding electrode 56. In operation, the shielding electrode 56 and the sensing electrode 54 are driven by the same AC voltage source 60, so that the guard electrode 56 prevents the electric field of the sensing electrode 54 to couple with the vehicle chassis or the seat frame, depending on where the antenna electrode is mounted. The sensing electrode 54 is thus active only in the direction of a seat occupant. Fig. 7 also shows a current detector 62, which detects the loading current (in loading mode) or the current induced by another antenna electrode (in coupling mode).

## Claims

1. Seat occupancy detection system for a vehicle, comprising
a seat antenna electrode (10) arranged in a seat (12) of a vehicle
a floor antenna electrode (14.1) arranged in a foot area associated with said seat (12) and
a driver and evaluation circuit (18) operatively connected to said seat and floor antenna electrodes (10, 14.1) including means for determining capacitive coupling of said seat and floor antenna electrodes with an object,
**characterized in that**
said seat occupancy detection system comprises at least one additional floor sensor arranged in said foot area, said additional floor sensor including at least one additional floor antenna electrode (14.2, 14.3, 14.4, 14.5, 14.6), said floor antenna electrode and said additional floor sensor being individually operable by said driver and evaluation circuit (18).

2. The system according to claim 1, wherein at least one of said at least one additional floor antenna electrode (14.2, 14.3, 14.4, 14.5, 14.6) and said floor antenna electrode (14.1) is arranged on a left side of said foot area with respect to an imaginary longitudinal line (44) and at least one of said at least one additional floor antenna electrode and said floor antenna electrode is arranged on a right side of said foot area with respect to said imaginary longitudinal line, said imaginary longitudinal line extending substantially centrally through said vehicle seat (12) and said foot area in a normal direction of travel of said vehicle.

3. The system according to claim 1 or 2, wherein at least one of said at least one additional floor antenna electrode (14.2, 14.3, 14.4, 14.5, 14.6) and said floor antenna electrode (14.1) is arranged on a front side of said foot area with respect to an imaginary transversal line (42) and at least one of said at least one additional floor antenna electrode and said floor antenna electrode is arranged on a rear side of said foot area with respect to said imaginary transversal line, said imaginary transversal line extending through said foot area substantially perpendicular to a normal direction of travel of said vehicle.

4. The system according to claim 2 or 3, wherein said driver and evaluation circuit (18) includes means for determining capacitive coupling between individual floor antenna electrodes.

5. The system according to any one of claims 1 to 4, wherein said floor antenna electrodes (14.1, 14.2, 14.3, 14.4, 14.5, 14.6) are arranged around
a central region (36) of said foot area, said central region being devoid of an antenna electrode, said central region being dimensioned and located in such a way that it accommodates for supporting a support leg (38) of an auxiliary child seat (40) placed on said seat (12).

6. The system according to any one of claims 1 to 5, wherein said additional floor sensor includes a pressure sensor (46) and wherein said driver and evaluation circuit includes means for determining a pressure sensed by said pressure sensor.

7. The system according to any one of claims 1 to 6, wherein said seat occupancy detection system comprises at least one additional seat antenna electrode arranged in said seat (12), each of said seat antenna electrodes being individually operable by said driver and evaluation circuit (18).

8. The system according to any one of claims 1 to 7, wherein said driver and evaluation circuit (18) includes means for individually determining capacitive coupling of each one of said antenna electrodes (10, 14.1, 14.2, 14.3, 14.4, 14.5, 14.6) with an occupant (30) placed on said seat (12) and/or in said foot area.

9. The system according to any one of claims 1 to 8, wherein said seat and/or floor antenna electrodes (10, 14.1, 14.2, 14.3, 14.4, 14.5, 14.6) comprise a sensing electrode (54) and a shielding electrode (56), said sensing electrode being arranged in substantially parallel facing relationship with said shielding electrode, said sensing electrode being directed towards an occupant (30) when said occupant is seated on said seat (12), said shielding electrode being directed away from said occupant when said occupant is seated on said seat.

## Patentansprüche

1. Sitzbelegungserkennungssystem für ein Fahrzeug, umfassend:
eine Sitzantennenelektrode (10), die in einem Sitz (12) eines Fahrzeugs angeordnet ist;
eine Bodenantennenelektrode (14.1), die in einem Fußbereich angeordnet ist, der dem Sitz (12) zugeordnet ist; und
eine Treiber- und Auswerteschaltung (18), die mit den Sitz- und Bodenantennenelektroden (10, 14 1) betrieblich verbunden ist und Mittel zum Ermitteln der kapazitiven Kopplung der Sitz- und Bodenantennenelektroden mit einem Gegenstand umfasst;
**dadurch gekennzeichnet, dass**
Sitzbelegungserkennungssystem mindestens einen zusätzlichen Bodensensor umfasst, der im Fußbereich angeordnet ist, wobei der zusätzliche Bodensensor mindestens eine zusätzliche Bodenantennenelektrode (14.2, 143, 14.4, 14.5, 14 6) umfasst, wobei die Bodenantennenelektrode und der zusätzliche Bodensensor einzeln durch die Treiber- und Auswerteschaltung (18) betreibbar sind.

2. System nach Anspruch 1, bei dem mindestens eine der mindestens einen zusätzlichen Bodenantennenelektrode (14 2, 14.3, 14 4, 14.5, 14.6) und der Bodenantennenelektrode (14.1) an einer linken Seite des Fußbereichs in Bezug auf eine imaginäre Längslinie (44) angeordnet ist und mindestens eine der mindestens einen zusätzlichen Bodenantennenelektrode und der Bodenantennenelektrode an einer rechten Seite des Fußbereichs in Bezug auf die imaginäre Längslinie angeordnet ist, wobei die imaginäre Längslinie im Wesentlichen mittig durch den Fahrzeugsitz (12) und den Fußbereich in einer normalen Fahrtrichtung des Fahrzeugs verläuft.

3. System nach Anspruch 1 oder 2, bei dem mindestens eine der mindestens einen zusätzlichen Bodenantennenelektrode (14 2, 14.3, 14 4, 14.5, 14 6) und der Bodenantennenelektrode (14 1) an einer Vorderseite des Fußbereichs in Bezug auf eine imaginäre Querlinie (42) angeordnet ist und mindestens eine der mindestens einen zusätzlichen Bodenantennenelektrode und der Bodenantennenelektrode an einer Rückseite des Fußbereichs in Bezug auf die imaginäre Querlinie angeordnet ist, wobei die imaginäre Querlinie durch den Fußbereich im Wesentlichen senkrecht zu einer normalen Fahrtrichtung des Fahrzeugs verläuft.

4. System nach Anspruch 2 oder 3, bei dem die Treiber- und Auswerteschaltung (18) Mittel zum Ermitteln der kapazitiven Kopplung zwischen den einzelnen Bodenantennenelektroden umfasst.

5. System nach irgendeinem der Ansprüche 1 bis 4, bei dem die Bodenantennenelektroden (14.1, 14 2, 14.3, 14 4, 14 5, 146) rings um einen mittigen Bereich (36) des Fußbereichs angeordnet sind, wobei der mittige Bereich ohne eine Antennenelektrode ist, wobei der mittige Bereich in einer solchen Weise dimensioniert und angeordnet ist, dass er Platz für das Stützen eines Stützbeins (38) eines Zusatzkindersitzes (40) bietet, der auf dem Sitz (12) platziert ist.

6. System nach irgendeinem der Ansprüche 1 bis 5, bei dem der zusätzliche Bodensensor einen Drucksensor (46) umfasst und bei dem die Treiber- und Auswerteschaltung Mittel zum Ermitteln eines Drucks umfasst, der vom Drucksensor erfasst wird.

7. System nach irgendeinem der Ansprüche 1 bis 6, bei dem das System zur Sitzbelegungserkennung mindestens eine zusätzliche Sitzantennenelektrode umfasst, die im Sitz (12) angeordnet ist, wobei jede der Sitzantennenelektroden einzeln durch die Treiber- und Auswerteschaltung (18) betreibbar ist.

8. System nach irgendeinem der Ansprüche 1 bis 7, bei dem die Treiber- und Auswerteschaltung (18) Mittel zum einzelnen Ermitteln der kapazitiven Kopplung jeder der Antennenelektroden (10, 14 1, 14.2, 14.3, 14.4, 14.5, 146) mit einem Insassen (30) umfasst, der auf dem Sitz (12) und/oder im Fußbereich platziert ist.

9. System nach irgendeinem der Ansprüche 1 bis 8, bei dem die Sitz- und/oder Bodenantennenelektroden (10, 14.1, 14.2, 14.3, 14.4, 14 5, 14.6) eine Fühlelektrode (54) und eine Abschirmelektrode (56) umfassen, wobei die Fühlelektrode in im Wesentlichen parallel gegenüberliegnder Beziehung zur Abschirmelektrode angeordnet ist, wobei die Fühlelektrode zu einem Insassen (30) hin gerichtet ist, wenn der Insasse auf dem Sitz (12) sitzt, wobei die Abschirmelektrode vom Insassen fort gerichtet ist, wenn der Insasse auf dem Sitz sitzt.

## Revendications

1. Système de détection d'occupation de siège pour un véhicule, comprenant
une électrode antenne de siège (10) agencée dans un siège (12) d'un véhicule
une électrode antenne de sol (14 1) agencée dans une zone de pieds associée avec ledit siège (12) et
un circuit de commande et d'évaluation (18) opérationnellement connecté auxdites électrodes antennes de siège et de sol (10, 14.1) incluant un moyen pour déterminer un couplage capacitif desdites électrodes antennes de siège et de sol avec un objet,
**caractérisé en ce que**
ledit système de détection d'occupation de siège comprend au moins un détecteur de sol additionnel agencé dans ladite zone de pieds, ledit détecteur de sol additionnel incluant au moins une électrode antenne de sol additionnelle (14.2, 14.3, 14.4, 14.5, 14 6), ladite électrode antenne de sol et ledit détecteur de sol additionnel étant individuellement utilisables par ledit circuit de commande et d'évaluation (18).

2. Système selon la revendication 1, dans lequel au moins une desdites au moins une électrode antenne de sol additionnelle (14.2, 14.3, 14 4, 14.5, 14.6) et de ladite électrode antenne de sol (14.1) est agencée sur un côté gauche de ladite zone de pieds par rapport à une ligne longitudinale imaginaire (44) et au moins une desdites au moins une électrode antenne de sol additionnelle et de ladite électrode antenne de sol est agencée sur un côté droit de ladite zone de pieds par rapport à ladite ligne longitudinale imaginaire, ladite ligne longitudinale imaginaire s'étendant substantiellement centralement à travers ledit siège de véhicule (12) et ladite zone de pieds dans une direction de déplacement normale dudit véhicule

3. Système selon la revendication 1 ou 2, dans lequel au moins une desdites au moins une électrode antenne de sol additionnelle (14.2, 14.3, 14.4, 14.5, 14 6) et de ladite électrode antenne de sol (14 1) est agencée sur un côté avant de ladite zone de pieds par rapport à une ligne transversale imaginaire (42) et au moins une desdites au moins une électrode antenne de sol additionnelle et de ladite électrode antenne de sol est agencée sur un côté arrière de ladite zone de pieds par rapport à ladite ligne transversale imaginaire, ladite ligne transversale imaginaire s'étendant à travers ladite zone de pieds substantiellement perpendiculairement à une direction de déplacement normale dudit véhicule

4. Système selon la revendication 2 ou 3, dans lequel ledit circuit de commande et d'évaluation (18) inclut un moyen pour déterminer un couplage capacitif entre électrodes antennes de sol individuelles

5. Système selon l'une quelconque des revendications 1 à 4, dans lequel lesdites électrodes antennes de sol (14 1, 14.2, 14 3, 144, 14.5, 14.6) sont agencées autour d'une région centrale (36) de ladite zone de pieds, ladite région centrale étant dépourvue d'une électrode antenne, ladite région centrale étant dimensionnée et localisée de telle sorte qu'elle permet de recevoir et supporter un montant de support (38) d'un siège auxiliaire pour enfant (40) placé sur ledit siège (12).

6. Système selon l'une quelconque des revendications 1 à 5, dans lequel ledit détecteur de sol additionnel inclut un détecteur de pression (46) et dans lequel ledit circuit de commande et d'évaluation inclut un moyen pour déterminer une pression détectée par ledit détecteur de pression.

7. Système selon l'une quelconque des revendications 1 à 6, dans lequel ledit système de détection d'occupation de siège comprend au moins une électrode antenne de siège additionnelle agencée dans ledit siège (12), chacune desdites électrodes antennes de siège étant individuellement utilisable par ledit circuit de commande et d'évaluation (18).

8. Système selon l'une quelconque des revendications 1 à 7, dans lequel ledit circuit de commande et d'évaluation (18) inclut un moyen pour déterminer individuellement le couplage capacitif de chacune desdites électrodes antennes (10, 14 1, 14.2, 143, 14.4, 14.5, 14.6) avec un occupant (30) placé sur ledit siège (12) et/ou dans ladite zone de pieds.

9. Système selon l'une quelconque des revendications 1 à 8, dans lequel lesdites électrodes antennes de siège et/ou de sol (10, 14.1, 14.2, 14.3, 14.4, 14.5, 14 6) comprennent une électrode de détection (54) et une électrode de protection (56), ladite électrode de détection étant agencée dans une relation face à face substantiellement parallèle avec ladite électrode de protection, ladite électrode de détection étant dirigée vers un occupant (30) lorsque ledit occupant est assis sur ledit siège (12), ladite électrode de protection étant dirigée à l'opposé dudit occupant lorsque ledit occupant est assis sur ledit siège
